# EUROPEAN PATENT APPLICATION

(11) **EP 4 231 243 A1**
(43) Date of publication of application: **23.08.2023**
(21) Application number: 21890590.9
(22) Date of filing: 27.05.2021
(51) Int. Cl.: G06T 15/20

(54) **DATA STORAGE MANAGEMENT METHOD, OBJECT RENDERING METHOD, AND DEVICE**

(30) Priority: 13.11.2020 CN 202011276117
(71) Applicant: Huawei Technologies Co., Ltd., Shenzhen, Guangdong 518129 (CN)
(72) Inventor: CHEN, Xinghua, Shenzhen, Guangdong 518129 (CN); WEI, Chen, Shenzhen, Guangdong 518129 (CN); LI, Zhenpeng, Shenzhen, Guangdong 518129 (CN); ZHANG, Ze, Shenzhen, Guangdong 518129 (CN); ZHOU, Zhen, Shenzhen, Guangdong 518129 (CN)
(74) Representative: Goddar, Heinz J.
(86) International application number: PCT/CN2021/096294
(87) International publication number: WO 2022/100059

(57) **Abstract**

A data storage management method is provided, which may be applied to a game scenario or an animation scenario. The method includes: obtaining index data of a first LOD model, where the first LOD model is a preconfigured basic model used to render a target object, and the index data is used to mark vertices of the first LOD model; determining index data of a second LOD model in response to a selection operation on a first simplification ratio, where the second LOD model is a simplified model of the target object, and vertices of the second LOD model are a subset of the vertices of the first LOD model; and storing the index data of the second LOD model, but not storing rendering data of the second LOD model. For a plurality of LOD models of a same target object, vertices of a basic model may be reused, and rendering data of the basic model may be shared. Therefore, storage space used to store data of the LOD model can be saved.

## Description

This application claims priority to Chinese Patent Application No. 202011276117.4, filed with the China National Intellectual Property Administration on November 13, 2020 and entitled "DATA STORAGE MANAGEMENT METHOD, OBJECT RENDERING METHOD, AND DEVICE", which is incorporated herein by reference in its entirety.

### TECHNICAL FIELD

This application relates to the field of computer technologies, and specifically, to a data storage management method, an object rendering method, and a device.

### BACKGROUND

In a game scenario, display of various roles is usually completed by rendering a corresponding model of each role. Therefore, a precision degree of the model directly affects rendering effect. However, a calculation amount of a high-precision model is very large, which reduces rendering efficiency. Therefore, a level of detail (level of detail, LOD) model appears. An idea of the LOD model is to provide a plurality of LOD models with different precisions based on different prominence degrees of a role in the game scenario as a game goes on. In this way, a model with a corresponding precision may be selected for rendering based on the prominence degree of the role in the game scenario. This does not affect rendering effect, and improves rendering efficiency.

A plurality of LOD models for one role are usually separately produced by a game developer. Each LOD model has one set of independent vertex data, index data, texture data, and a light map. Obtaining the light map is particularly time-consuming. It can be seen that a current LOD model not only affects a development speed, but also requires large storage space to store data of the LOD model.

### SUMMARY

An embodiment of this application provides a data storage management method, to quickly obtain a level of detail (level of detail, LOD) model, and reduce storage space occupied by data of a plurality of LOD models of one object. Embodiments of this application further provide a corresponding object rendering method, a device, a computer-readable storage medium, a computer program product, and the like.

A first aspect of this application provides a data storage management method. The method may be applied to a terminal device used for game development or animation development. The method includes: obtaining index data of a first LOD model, where the first LOD model is a preconfigured basic model used to render a target object, and the index data is used to mark vertices of the first LOD model; determining index data of a second LOD model in response to a selection operation on a first simplification ratio, where the second LOD model is an LOD model that is of the target object and that corresponds to the first simplification ratio, the first simplification ratio indicates a ratio of the index data of the second LOD model to the index data of the first LOD model, and vertices of the second LOD model are a subset of the vertices of the first LOD model; and storing the index data of the second LOD model.

It should be noted that rendering data of the first LOD model is required in a rendering method provided in this application. However, this embodiment does not limit a source of a storage location of the rendering data. Rendering data of an LOD model is data used to render an object with a precision corresponding to the LOD model. The index data is a type of the rendering data, and the two types of data may overlap.

According to the foregoing method, unlike the prior art, rendering data of the second LOD model, namely, a simplified model, does not need to be stored. Only the index data of the second LOD model needs to be stored. This can save storage space. Especially when there are a plurality of simplified models, unlike the prior art, each simplified model does not need to store corresponding rendering data, saving storage space to a large extent.

In the first aspect, the target object may be an object such as a person, an animal, a building, a plant, or a weapon in a game scenario or an animation scenario. The target object may have a plurality of LOD models, and each LOD model has a different precision. In this application, "a plurality of" includes two or more, or may be represented as at least two.

The first LOD model is a basic model of the target object. The first LOD model is obtained through preconfiguration. Compared with another LOD model in the plurality of LOD models of the target object, the first LOD model has a largest quantity of vertices. The another LOD model is a simplified model obtained based on the first LOD model, and the second LOD model is a simplified model obtained based on the first simplification ratio. It may be understood that different quantities of vertices are selected from the vertices of the first LOD model, to obtain a simplified model with a different simplification degree. The LOD model is usually formed by splicing triangles. Each triangle has three vertices. Each vertex has one index value, and a collection of the index values of the three vertices is index data of the triangle. A quantity of triangles included in one LOD model is an amount of index data of the LOD model.

In this application, the simplification ratio indicates a ratio of an amount of index data of the simplified LOD model to an amount of index data of the first LOD model. Because the first LOD model has the largest quantity of vertices and a largest quantity of triangles, the first LOD model has a largest amount of index data. Therefore, in this application, the simplification ratio is less than 1. An operation interface of a terminal device of a developer may include a plurality of simplification ratio selection items or simplification ratio adjustment items. The developer may select a corresponding simplification ratio based on a requirement, and the terminal device may determine index data of a corresponding simplified model based on the simplification ratio. In this application, a process of determining the index data of the second LOD model may be obtained according to a simplification algorithm. The simplification algorithm means reducing the quantity of triangles in the basic model based on a topology structure of the basic model while ensuring that an edge line and an overall outer surface of the simplified model are stable, and distortion does not occur. For example, a process of obtaining a simplified model based on a basic model having 100 triangles at a simplification ratio of 0.5 may be: evenly hiding some vertices based on the model, and then re-establishing 50 triangles for remaining vertices, to obtain the simplified model at the simplification ratio of 0.5.

In this application, the index data of the second LOD model is obtained by combining vertices. Although the vertices of the second LOD model are the subset of the vertices of the first LOD model, a vertex combination relationship used to form the triangle may be different. Therefore, the index data of the second LOD model may be different from the index data of the first LOD model.

The rendering data of the first LOD model includes vertex data, normal data, texture (UV) coordinates, a texture map, a light map, and the like of the first LOD model. The light map needs to be obtained through light baking. Light baking usually takes dozens of minutes to dozens of hours.

In this application, the vertices of the simplified LOD model are the subset of the vertices of the first LOD model. For example, if the first LOD model has 100 vertices, and the second LOD model has 50 vertices, the 50 vertices are selected from the 100 vertices of the first LOD model. Rendering data used to render the target object is related to the vertices. The vertices of the second LOD model are the subset of the vertices of the first LOD model, in other words, the second LOD model reuses some vertices of the first LOD model. Therefore, rendering data related to the reused vertices may also be reused. In this way, rendering data does not need to be generated for the simplified second LOD model, and a light map does not need to be obtained for the second LOD model by performing light baking. This can save time for light baking, and improve efficiency of generating the simplified model. In addition, the simplified LOD model may reuse the rendering data of the first LOD model. Therefore, for a plurality of LOD models of one target object, only index data of the plurality of LOD models needs to be stored in an associated manner, and one piece of rendering data of the first LOD model needs to be stored. In this way, one piece of complete rendering data does not need to be stored for each LOD model. This can save storage space.

In a possible implementation of the first aspect, a manner of storing the index data of the second LOD model includes: storing the index data of the second LOD model and the index data of the first LOD model in an associated manner, or in a consecutive manner, to facilitate searching.

In a possible implementation of the first aspect, the storing the index data of the second LOD model and the index data of the first LOD model in an associated manner in the foregoing step includes: storing the index data of the first LOD model in first storage space, and storing the index data of the second LOD model in second storage space, where a last address of the first storage space is adjacent to a first address of the second storage space. In another implementation, a first address of the first storage space is adjacent to a last address of the second storage space.

In this possible implementation, the first storage space and the second storage space are consecutive, and storing the index data of the two LOD models in an associated manner may be consecutively storing the index data of the second LOD model after the index data of the first LOD model. In this way, index data of each LOD model may be represented by using a start address offset value and a length, simplifying a manner of representing the index data of the LOD model.

In a possible implementation of the first aspect, the method includes: determining index data of a third LOD model in response to a selection operation on a second simplification ratio, where the third LOD model is an LOD model that is of the target object and that corresponds to the second simplification ratio, the second simplification ratio indicates a ratio of the index data of the third LOD model to the index data of the first LOD model, vertices of the third LOD model are a subset of the vertices of the first LOD model, and the second simplification ratio is less than the first simplification ratio; and storing the index data of the third LOD model in third storage space, where a first address of the third storage space is adjacent to a last address of the second storage space. In another implementation, a last address of the third storage space is adjacent to a first address of the second storage space.

In this possible implementation, if the terminal device successively receives selection operations of different simplification ratios for the first LOD model, the terminal device consecutively stores, in an order of responding to the different simplification ratios, index data of the LOD model that is successively generated. This can simplify a manner of representing the index data of the LOD model.

In a possible implementation of the first aspect, the method includes: generating a model switching policy for the target object, where the model switching policy includes a switching condition and a switching selection item, the switching condition indicates a relationship between a switching parameter that triggers LOD model switching of the target object and a switching threshold, the switching selection item includes both a start address offset value and a length of index data of each of at least two LOD models, and each of the at least two LOD models is used to render the target object with a different precision; and storing the model switching policy and the index data of each LOD model in an associated manner.

In this possible implementation, the model switching policy is used to control switching of LOD models with different precisions. The switching condition may be a comparison relationship between the switching parameter and the switching threshold. If the switching parameter is greater than the switching threshold, the first LOD model may be selected. If the switching parameter is less than the switching threshold, the second LOD model may be selected. Certainly, when there are three or more LOD models, there may be a plurality of switching thresholds. In this application, a corresponding LOD model may be determined based on the relationship between the switching parameter and the corresponding switching threshold. In this application, the index data of each LOD model is stored in a consecutive manner. Therefore, storage space for the index data of each LOD model may be indicated by using both a start address offset value and a length of the index data of each LOD model. The model switching policy and the index data of each LOD model are stored in an associated manner, so that when the target object is rendered, index data of a corresponding LOD model can be quickly found by using the model switching policy.

In a possible implementation of the first aspect, the method includes: encapsulating the model switching policy, the index data of each LOD model that is stored in an associated manner, and rendering data of the first LOD model in an application packet of the target object. The rendering data of the first LOD model is used to render the target object with a precision corresponding to the first LOD model.

In this possible implementation, the rendering data of the first LOD model is usually data of the first LOD model except the index data of the first LOD model. The model switching policy, the index data of each LOD model that is stored in an associated manner, and the rendering data of the first LOD model that corresponds to the target are encapsulated in one application packet. In this way, when a game or an animation is run, installation may be quickly completed by downloading the application packet.

In a possible implementation of the first aspect, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object. The application scenario may be specifically a video scenario, and the video scenario includes the game scenario or the animation scenario.

In this possible implementation, the screen-to-body ratio may indicate an importance degree of the target object on the screen by using the height of the target object on the screen. If the screen-to-body ratio is small, it indicates that the target object is not important on the screen, and the target object may be rendered by using a low-precision LOD model. If the screen-to-body ratio is large, it indicates that the target object is important on the screen, and the target object may be rendered by using a high-precision LOD model. The observation distance may indicate the importance degree of the target object on the screen by using the distance between the target object and the virtual camera. If the observation distance is large, it indicates that the target object is far away from the virtual camera, and the target object is not important on the screen. In this case, the target object may be rendered by using a low-precision LOD model. If the observation distance is small, it indicates that the target object is close to the virtual camera, and the target object is important on the screen, and the target object may be rendered by using a high-precision LOD model. This can ensure a requirement for rendering quality, and improve rendering efficiency.

A second aspect of this application provides an object rendering method. The method is applied to a terminal device in a game scenario or an animation scenario. The method includes: obtaining a switching parameter that triggers switching of a level of detail LOD model of a target object; determining index data of a target LOD model based on the switching parameter, where the target LOD model is one of at least two LOD models corresponding to the target object, and each of the at least two LOD models is used to render the target object with a different precision; obtaining, from rendering data of a first LOD model, target rendering data corresponding to the index data of the target LOD model, where target rendering data is included in the rendering data of the first LOD model and the first LOD model is a preconfigured basic model; and rendering, based on the target rendering data, the target object with a precision corresponding to the target LOD model.

In a process of running the application scenario such as the game scenario or the animation scenario, an application packet of each object in the application scenario may be downloaded to the terminal device, or the application packet of each object in the application scenario may be stored in a corresponding server. During running a game and the like, when the target object is to be rendered, the index data of the target LOD model may be determined based on the switching parameter, the target rendering data corresponding to the index data of the target LOD model is obtained from the rendering data of the first LOD model based on the index data of the target LOD model, and then the target object is rendered based on the target rendering data.

In this application, for another feature that is the same as that in the first aspect or the possible implementations of the first aspect, refer to definitions in the first aspect or the possible implementations of the first aspect for understanding. Details are not described herein again. It can be learned from the second aspect that, because the target LOD model may reuse the rendering data of the first LOD model, for a plurality of LOD models of one target object, the terminal device or the server only needs to store index data of the plurality of LOD models in an associated manner, and then store one piece of data that is in the first LOD model and that is used to render the target object. In this way, one piece of complete rendering data does not need to be stored for each LOD model. This can save storage space. In addition, in a rendering process, the rendering data of the first LOD model may be reused as rendering data of the target model, so that rendering data, for example, a light map, does not need to be regenerated for the target model. This can avoid re-executing a process such as photo baking, and improve rendering efficiency.

In a possible implementation of the second aspect, the determining index data of a target LOD model based on the switching parameter in the foregoing step includes: determining a target switching selection item based on a relationship between the switching parameter and a switching threshold, where the target switching selection item includes both a start address offset value and a length of the index data of the target LOD model; determining target storage space for the index data of the target LOD model based on both the start address offset value and the length of the index data of the target LOD model; and obtaining the index data of the target LOD model from the target storage space.

In this possible implementation, the index data of the plurality of LOD models of the target object is stored in a consecutive manner. Therefore, storage space for index data of each LOD model may be indicated by using a start address offset value and a length of the index data of the LOD model, so that index data of a corresponding LOD model is quickly found in corresponding storage space, and rendering is further completed. Therefore, in this possible implementation, target object rendering efficiency can be improved.

In a possible implementation of the second aspect, the determining target storage space for the index data of the target LOD model based on both the start address offset value and the length of the index data of the target LOD model in the foregoing step includes: determining, based on the start address offset value of the index data of the target LOD model, an initial location of the index data of the target LOD model in index storage space for index data of the at least two LOD models, where the index data of the at least two LOD models is consecutively stored in the index storage space in a sequence of obtaining the index storage space by each of the at least two LOD models; and determining the target storage space for the index data of the target LOD model based on the initial location of the index data of the target LOD model and the length of the index data of the target LOD model.

In this possible implementation, the index data of the plurality of LOD models of the target object is stored in a consecutive manner. Therefore, the initial location of the index data of the target LOD model may be found based on the start address offset value of the index data of the target LOD model, and then storage space for the index data of the target LOD model is determined based on the length of the index data of the target LOD model. It can be learned from this possible implementation that the index data of the target LOD model can be found by using only two parameters, namely the start address offset value and the length of the index data. This can improve rendering efficiency of the target object.

In a possible implementation of the second aspect, after the determining a target switching selection item based on a relationship between the switching parameter and a switching threshold, the method further includes: updating data in a switching interface to both the start address offset value and the length of the index data of the target LOD model. The switching interface is used to configure a start address offset value and a length that are used to update index data of a LOD model used by the target object.

In this possible implementation, the used LOD model may be controlled by using the switching interface. In this application, both the start address offset value and the length of the index data of the selected target LOD model need to be configured in the switching interface, and then the target LOD model can be executed in a rendering process. The used LOD model is controlled by using the switching interface, so that use of the LOD model is accurately controlled.

In a possible implementation of the second aspect, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object.

In this possible implementation, the screen-to-body ratio may indicate an importance degree of the target object on the screen by using the height of the target object on the screen. If the screen-to-body ratio is small, it indicates that the target object is not important on the screen, and the target object may be rendered by using a low-precision LOD model. If the screen-to-body ratio is large, it indicates that the target object is important on the screen, and the target object may be rendered by using a high-precision LOD model. The observation distance may indicate the importance degree of the target object on the screen by using the distance between the target object and the virtual camera. If the observation distance is large, it indicates that the target object is far away from the virtual camera, and the target object is not important on the screen. In this case, the target object may be rendered by using a low-precision LOD model. If the observation distance is small, it indicates that the target object is close to the virtual camera, and the target object is important on the screen, and the target object may be rendered by using a high-precision LOD model. This can ensure a requirement for rendering quality, and improve rendering efficiency.

In a possible implementation of the second aspect, the target object is a static object in an application scenario, and the application scenario includes a game scenario or an animation scenario.

A third aspect of this application provides a data storage management apparatus. The data storage management apparatus has a function of performing the method in any one of the first aspect or the possible implementations of the first aspect. The function may be implemented by hardware, or may be implemented by hardware executing corresponding software. The hardware or software includes one or more modules corresponding to the foregoing function, for example, an obtaining unit, a response unit, and a storage management unit.

A fourth aspect of this application provides an object rendering apparatus. The object rendering apparatus has a function of performing the method in any one of the second aspect or the possible implementations of the second aspect. The function may be implemented by hardware, or may be implemented by hardware executing corresponding software. The hardware or software includes one or more modules corresponding to the foregoing function, for example, a first obtaining unit, a second obtaining unit, a determining unit, and a rendering unit.

A fifth aspect of this application provides a computer device. The computer device includes at least one processor, a memory, an input/output (input/output, I/O) interface, and computer-executable instructions that are stored in the memory and that can be run on the processor. When the computer-executable instructions are executed by the processor, the processor performs the method in any one of the first aspect or the possible implementations of the first aspect.

According to a sixth aspect, this application provides a computer device. The computer device includes at least one processor, a memory, an input/output (input/output, I/O) interface, and computer-executable instructions that are stored in the memory and that can be run on the processor. When the computer-executable instructions are executed by the processor, the processor performs the method in any one of the second aspect or the possible implementations of the second aspect.

According to a seventh aspect, this application provides a computer-readable storage medium storing one or more computer-executable instructions. When the computer-executable instructions are executed by a processor, the processor performs the method in any one of the first aspect or the possible implementations of the first aspect.

According to an eighth aspect, this application provides a computer-readable storage medium storing one or more computer-executable instructions. When the computer-executable instructions are executed by a processor, the processor performs the method in any one of the second aspect or the possible implementations of the second aspect.

According to a ninth aspect, this application provides a computer program product storing one or more computer-executable instructions. When the computer-executable instructions are executed by a processor, the processor performs the method in any one of the first aspect or the possible implementations of the first aspect.

A tenth aspect of this application provides a computer program product storing one or more computer-executable instructions. When the computer-executable instructions are executed by a processor, the processor performs the method in any one of the second aspect or the possible implementations of the second aspect.

According to an eleventh aspect, this application provides a chip system. The chip system includes at least one processor, and the at least one processor is configured to support a data storage management apparatus in implementing the function in any one of the first aspect or the possible implementations of the first aspect. In a possible design, the chip system may further include a memory. The memory is configured to store program instructions and data that are necessary for the data storage management apparatus. The chip system may include a chip, or may include a chip and another discrete component.

A twelfth aspect of this application provides a chip system. The chip system includes at least one processor, and the at least one processor is configured to support an object rendering apparatus in implementing the function in any one of the second aspect or the possible implementations of the second aspect. In a possible design, the chip system may further include a memory. The memory is configured to store program instructions and data that are necessary for the object rendering apparatus. The chip system may include a chip, or may include a chip and another discrete component.

In embodiments of this application, for the plurality of LOD models of the same target object, the vertices of the preconfigured first LOD model may be reused in the simplified LOD model, and the rendering data that is related to the reused vertices and that is used to render the target object may also be reused. In this way, rendering data does not need to be generated for the simplified second LOD model, and a light map does not need to be obtained for the second LOD model by performing light baking. This can save time for light baking, and improve efficiency of generating the simplified model. In addition, the simplified LOD model may reuse data except the index data of the first LOD model. Therefore, for the plurality of LOD models of one target object, only the index data of the plurality of LOD models needs to be stored in an associated manner, and one piece of rendering data of the first LOD model except the index data needs to be stored. In this way, one piece of complete rendering data does not need to be stored for each LOD model. This can save storage space.

### BRIEF DESCRIPTION OF DRAWINGS

FIG. 1 is a schematic diagram of a structure of a rendering management system according to an embodiment of this application;
FIG. 2 is a schematic diagram of an embodiment of a data storage management method according to an embodiment of this application;
FIG. 3 is a schematic diagram of an operation interface according to an embodiment of this application;
FIG. 4A is a schematic diagram of a triangle of one LOD model according to an embodiment of this application;
FIG. 4B is a schematic diagram of a triangle of one simplified LOD model according to an embodiment of this application;
FIG. 5 is a diagram of a storage structure of index data of an LOD model according to an embodiment of this application;
FIG. 6 is a diagram of another storage structure of index data of an LOD model according to an embodiment of this application;
FIG. 7 is a schematic diagram of a storage structure of a plurality of LOD models of a target object according to an embodiment of this application;
FIG. 8 is a schematic diagram of an embodiment of object rendering according to an embodiment of this application;
FIG. 9 is a schematic diagram of an embodiment of a data storage management apparatus according to an embodiment of this application;
FIG. 10 is a schematic diagram of an embodiment of an object rendering apparatus according to an embodiment of this application; and
FIG. 11 is a schematic diagram of an embodiment of a computer device according to an embodiment of this application.

### DESCRIPTION OF EMBODIMENTS

The following describes embodiments of this application with reference to the accompanying drawings. It is clear that the described embodiments are only some rather than all of embodiments of this application. A person of ordinary skill in the art may learn that, with development of technologies and emergence of new scenarios, the technical solutions provided in embodiments of this application are also applicable to similar technical problems.

In the specification, claims, and accompanying drawings of this application, terms such as "first", "second" are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

An embodiment of this application provides a data storage management method, to quickly obtain a level of detail (level of detail, LOD) model, and reduce storage space occupied by data of a plurality of LOD models of one object. Embodiments of this application further provide a corresponding object rendering method, a device, a computer-readable storage medium, a computer program product, and the like. Details are separately described in the following.

The data storage management method provided in an embodiment of this application may be applied to a game development scenario, and the object rendering method provided in an embodiment of this application may be applied to a game running scenario. Certainly, the solutions provided in this application are not limited to being applied to the game scenario, and may further be applied to an animation scenario or another scenario that can be applied to the solutions of this application.

Regardless of the game scenario, the animation scenario, or another scenario applicable to the solutions of this application, a developer needs to generate an LOD model for an object in each scenario in advance. The object in embodiments of this application may be an object such as a person, an animal, a building, a plant, or a weapon in a game scenario or an animation scenario.

For ease of understanding, the following first describes some features in this application.

LOD is a common graphics optimization technology. A high-precision model is not needed for an object in many scenarios. For example, when the object is far away from a virtual camera, a size of the object becomes smaller and many details become blurred. In this case, a low-precision model can be used to replace the high-precision model. In other words, the LOD technology provides a plurality of LOD models with different precisions for one object, and determines a precision of a used LOD model based on a location and an importance degree of the object on a screen. This can improve rendering efficiency.

The model means a 3D model used in a game and an animation. The model can be divided into two parts: a mesh and a map. The mesh is formed by splicing a series of triangles, and is equivalent to a "skeleton" of the model. The map includes a texture map and a light map of the model, and is equivalent to a skin of the model. Based on composition of the mesh and the map, data of the model mainly includes vertex data, index data, normal data, texture (UV) coordinates, a texture map, a light map, and the like.

Mesh (Mesh): a series of triangles that are spliced, including vertex data, index data, normal data, and UV coordinates.

The vertex data stores coordinates of vertices (which may also be referred to as spatial points) of the model, which are usually three-dimensional.

Each vertex can be identified by an index value.

Index data of one triangle includes index values of three vertices forming the triangle.

The normal data specifies a normal direction of each vertex.

The UV coordinates specify a location of the map "applied" to the mesh.

Texture map: Any type of image is wrapped around a surface of a 3D model, like attaching a stamp to a plane, to increase surface details of a model.

Light map: Light map is obtained through light baking and stores a light result generated by a light source on an object surface in a scenario, that is, luminance information of each segment on a model surface.

Light baking: To make a light in a scenario close to an actual scenario, a plurality of light conditions need to be simulated, such as light source interaction and light reflection. Light calculation is extremely complex. If light calculation is performed in real time, system processing efficiency is greatly reduced. Therefore, the light result is usually calculated in advance and stored in the light map. The light result can be directly attached to an object surface during running. Due to complex light calculation, light baking usually takes dozens of minutes to dozens of hours.

Simplified model: A quantity of triangles is reduced by changing mesh information. As a result, local details of a model are ignored, and a model precision is reduced. However, this reduces a calculation workload of a rendering pipeline during processing vertex data. In this application, the simplified model has a same meaning as that of the low-precision model.

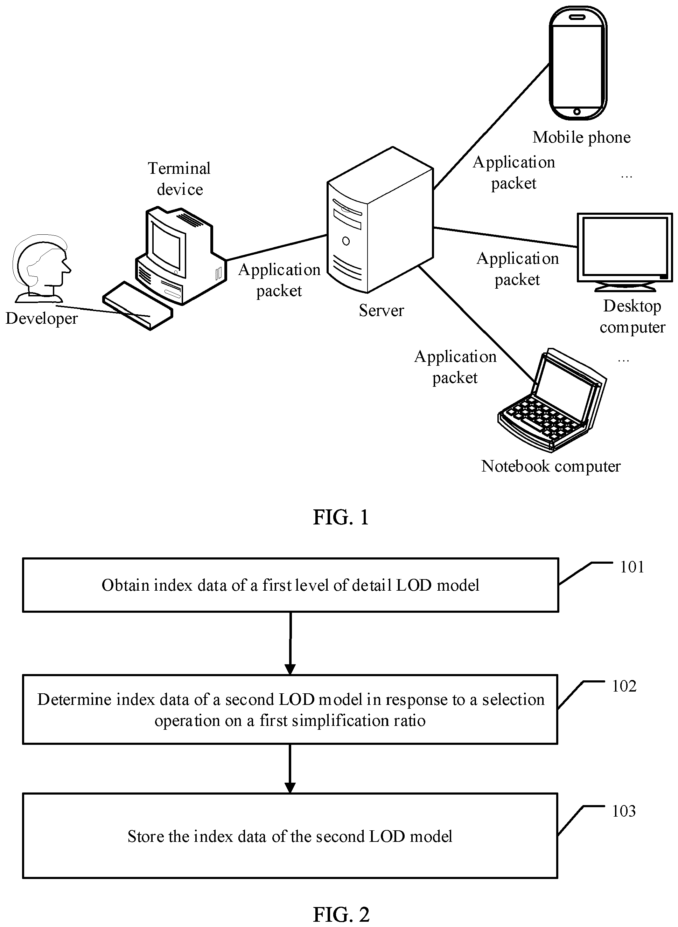

Regardless of whether the solutions of this application are applicable to the game scenario or the animation scenario, a development phase and a running phase are included. In a rendering management system shown in FIG. 1, a developer usually completes a development phase in a terminal device, and then stores an application packet (application package, APK) generated in the development phase in a server. A user may download a corresponding application packet from the server by using a terminal device to run a corresponding application scenario. Alternatively, the terminal device may interact with the server online to run the corresponding application scenario.

In embodiments of this application, the server is a physical machine. The terminal device (which may also be referred to as user equipment (user equipment, UE)) is a device having a wireless transceiver function, and may be deployed on land, for example, including an indoor or outdoor device, a handheld device, or a vehicle-mounted device, may be deployed on water (for example, on a ship), or may be deployed in the air (for example, on an airplane, a balloon, and a satellite). The terminal may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), and the like.

It can be learned from the foregoing description that the LOD technology improves rendering efficiency while ensuring rendering quality by using the plurality of LOD models with different precisions. Therefore, the developer needs to generate a plurality of LOD models with different precisions for one object in the application scenario by using the terminal device in the development phase, and then store data of the plurality of LOD models. The terminal device may be installed with a Unity platform, and perform these operations based on a slim LOD operation interface. The following describes a data storage management method in a development phase in an embodiment of this application with reference to the accompanying drawings.

As shown in FIG. 2, an embodiment of a data storage management method according to an embodiment of this application includes the following steps.

101: Obtain index data of a first level of detail LOD model.

The first LOD model is a preconfigured basic model used to render a target object, and the index data is used to mark vertices of the first LOD model.

The first LOD model is made by a developer in advance, and the first LOD model may be loaded to a terminal device of the developer.

102: Determine index data of a second LOD model in response to a selection operation on a first simplification ratio.

The second LOD model is an LOD model that is of the target object and that corresponds to the first simplification ratio. The first simplification ratio indicates a ratio of the index data of the second LOD model to the index data of the first LOD model. Vertices of the second LOD model are a subset of the vertices of the first LOD model.

In this embodiment of this application, the simplification ratio indicates a ratio of an amount of index data of a simplified LOD model to an amount of index data of the first LOD model. Because the first LOD model has the largest quantity of vertices and a largest quantity of triangles, the first LOD model has a largest amount of index data. Therefore, in this application, the simplification ratio is less than 1.

An operation interface of the terminal device of the developer may include a plurality of simplification ratio selection items or simplification ratio adjustment items. The developer may select a corresponding simplification ratio according to a requirement, and the terminal device may determine the index data of the simplified LOD model based on the simplification ratio.

Content displayed on the operation interface may be understood with reference to Table 1.

**Table 1: Content on an operation interface**

| LOD model of a target object | Quantity of triangles | Simplification ratio | Graphic preview |
|---|---|---|---|
| LOD model 1 | 200 | 1 | Click to preview |
| LOD model 2 | 100 | 0.5 | Click to preview |
| LOD model 3 | 50 | 0.25 | Click to preview |

It can be learned from Table 1 that the LOD model 1 is a basic model of the target object. The LOD model 1 has a largest quantity of vertices and a largest quantity of triangles. The LOD model 1 is not simplified. An image of the target object corresponding to the LOD model 1 may be viewed by clicking a corresponding preview link. The LOD model 2 is a simplified model obtained by performing simplification processing based on a simplification ratio of 0.5. A quantity of triangles of the LOD model 2 is half of that of the LOD model 1, in other words, only some vertices of the LOD model 1 are selected to form the LOD model 2. An image of the target object corresponding to the LOD model 2 may be viewed by clicking a corresponding preview link. The LOD model 3 is a simplified model obtained by performing simplification processing based on a simplification ratio of 0.25. A quantity of triangles of the LOD model 3 is a quarter of that of the LOD model 1, in other words, only some vertices of the LOD model 1 are selected to form the LOD model 2. An image of the target object corresponding to the LOD model 3 may be viewed by clicking a corresponding preview link.

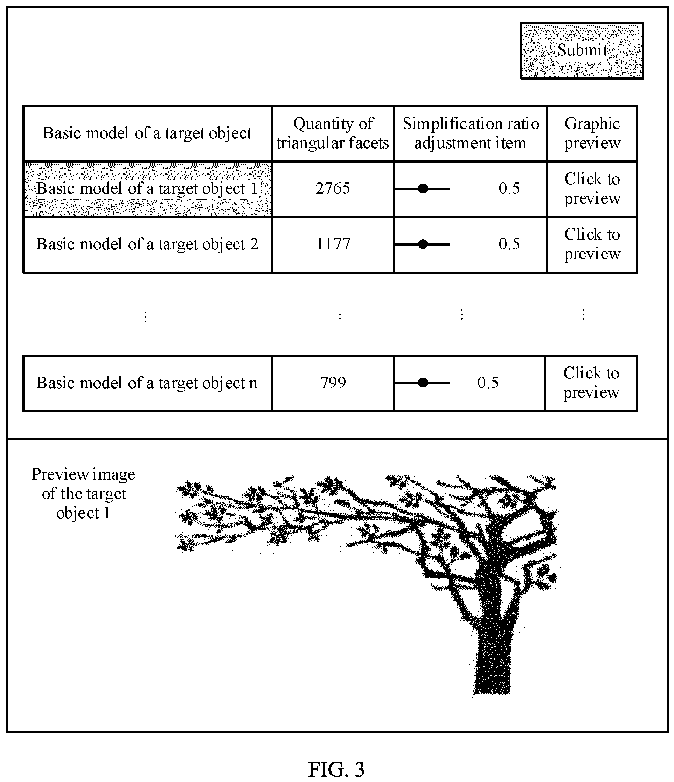

The data and form in Table 1 in this application are only examples. The operation interface may also be in another display form. As shown in FIG. 3, the operation interface includes basic models of a plurality of objects, and a quantity of triangles of each basic model is also displayed. The simplification ratio in FIG. 3 is adjustable. The simplification ratio may be adjusted by using a simplification ratio adjustment item, in other words, the simplification ratio may be adjusted by dragging a "key" with the simplification ratio adjustment item. Although the simplification ratio shown in FIG. 3 is 0.5, the simplification ratio is not limited to 0.5 in FIG. 3. Different simplification ratios may be obtained through adjustment. After determining the simplification ratio, the developer may click preview to display, at a bottom of the operation interface, an image of an adjusted target object at the simplification ratio.

Regardless of the manner shown in Table 1 or the manner shown in FIG. 3, once the simplification ratio is determined, the index data of the LOD model with the simplification ratio, namely, a collection of index values of three vertices of each triangle of the simplification model, may be determined based on the basic model of the target object. A "submit" key is clicked to store the index data of the LOD model with the simplification ratio.

103: Store the index data of the second LOD model.

Specifically, the index data of the second LOD model and the index data of the first LOD model are stored in an associated manner.

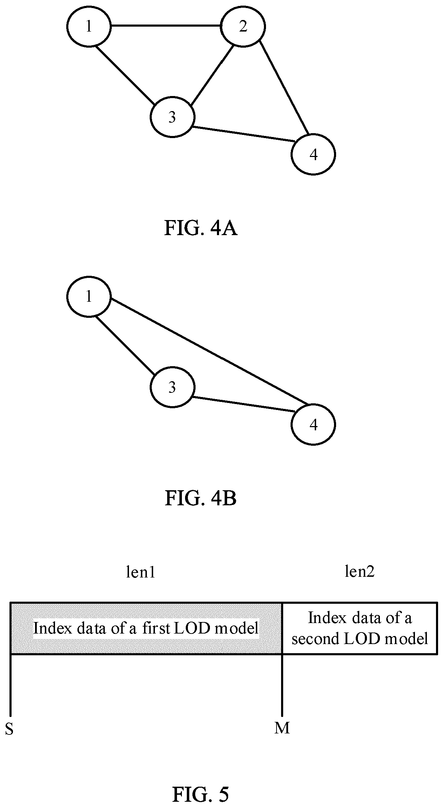

For the index data of the first LOD model and the index data of the second LOD model, refer to FIG. 4A and FIG. 4B for understanding.

As shown in FIG. 4A, four vertices of the first LOD model whose index values are 1, 2, 3, and 4 may form two triangles. Index data of the two triangles is (1, 2, 3) and (2, 3, 4). As shown in FIG. 4B, vertices of the second LOD model include three vertices of the first LOD model whose index values are 1, 3, and 4. The three vertices form one triangle, and index data of the triangle is (1, 3, 4). It can be learned from this example that the index data of the first LOD model is different from the index data of the second LOD model. Certainly, some of the index data of the second LOD model may overlap the index data of the first LOD model, but not all of the index data is the same.

Although the index data of the first LOD model is different from the index data of the second LOD model, the second LOD model uses the vertices of the first LOD model. Because data for rendering the target object is related to the vertices, rendering data of the simplified model may be a subset of rendering data of the basic model. Therefore, only one piece of rendering data of the basic model needs to be stored. In addition, the index data of the first LOD model and the index data of the second LOD model are stored in an associated manner, so that corresponding rendering data of the first LOD model may be reused in the second LOD model during rendering.

In this embodiment of this application, for a plurality of LOD models of a same target object, the vertices of the preconfigured first LOD model may be reused in the simplified LOD model, and the rendering data that is related to the reused vertices and that is used to render the target object may also be reused. In this way, rendering data does not need to be generated for the simplified second LOD model. This can improve efficiency of generating the simplified model. In addition, the simplified LOD model may reuse data except the index data of the first LOD model. Therefore, for the plurality of LOD models of one target object, only the index data of the plurality of LOD models needs to be stored in an associated manner, and one piece of rendering data of the first LOD model except the index data needs to be stored. In this way, one piece of complete rendering data does not need to be stored for each LOD model. This can save storage space.

Optionally, the foregoing manner of storing the index data of the second LOD model and the index data of the first LOD model in an associated manner may be: storing the index data of the first LOD model in the first storage space, and storing the index data of the second LOD model in the second storage space, where a last address of the first storage space is adjacent to a first address of the second storage space.

In this embodiment of this application, the first storage space and the second storage space are consecutive, and a last address of the first storage space and the first address of the second storage space are two consecutive addresses that are adjacent to each other. In this solution, the index data of the second LOD model may be consecutively stored after the index data of the first LOD model. In this way, index data of each LOD model may be represented by using a start address offset value and a length, simplifying a manner of representing the index data of the LOD model.

The start address offset value is a relative offset value. If a first address of the first storage space in which the first LOD model is located is 0, a start address offset value of the index data of the first LOD model is 0. If a first address of the first storage space in which the first LOD model is located is S, a start address offset value of the index data of the first LOD model is S. The length of the index data means an address length of all index data included in one LOD model in storage space.

During associated storage, for a storage format of the index data of the first LOD model and the index data of the second LOD model, refer to FIG. 5 for understanding. As shown in FIG. 5, the start address offset value of the index data of the first LOD model is S, a length of the index data of the first LOD model is len1, the start address offset value of the index data of the second LOD model is M, and a length of the index data of the second LOD model is len2. Because the index data of the first LOD model and the index data of the second LOD model are consecutively stored, M = S + len1.

In this embodiment of this application, there may be a plurality of simplified models for a same target object. In a development phase, the terminal device can obtain LOD models corresponding to different simplification ratios in response to selection operations for the different simplification ratios. For example, optionally, the terminal device determines index data of a third LOD model in response to a selection operation on a second simplification ratio. The third LOD model is an LOD model that is of the target object and that corresponds to the second simplification ratio. The second simplification ratio indicates a ratio of the index data of the third LOD model to the index data of the first LOD model. Vertices of the third LOD model are a subset of the vertices of the first LOD model. The second simplification ratio is less than the first simplification ratio. The index data of the third LOD model is stored in third storage space. A first address of the third storage space is adjacent to a last address of the second storage space.

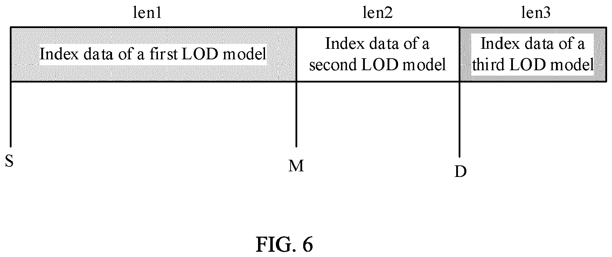

In this embodiment of this application, for a process of determining the index data of the third LOD model, refer to the foregoing process of obtaining the index data of the second LOD model for understanding. The index data of the third LOD model may be stored after the index data of the second LOD model. For a storage format, refer to FIG. 6 for understanding. As shown in FIG. 6, a start address offset value of the index data of the third LOD model is D. D=S+len1+len2. A length of the index data of the third LOD model is len3.

Optionally, the data storage management method provided in this embodiment of this application further includes: generating a model switching policy for the target object, where the model switching policy includes a switching condition and a switching selection item, the switching condition indicates a relationship between a switching parameter that triggers LOD model switching of the target object and a switching threshold, the switching selection item includes both a start address offset value and a length of index data of each of at least two LOD models, and each of the at least two LOD models is used to render the target object with a different precision; and storing the model switching policy and the index data of each LOD model in an associated manner.

In this embodiment of this application, the model switching policy is used to control switching of LOD models with different precisions. The switching condition may be a comparison relationship between the switching parameter and the switching threshold. If the switching parameter is greater than the switching threshold, the first LOD model may be selected. If the switching parameter is less than the switching threshold, the second LOD model may be selected. An example of the model switching policy in this embodiment of this application may be expressed as:

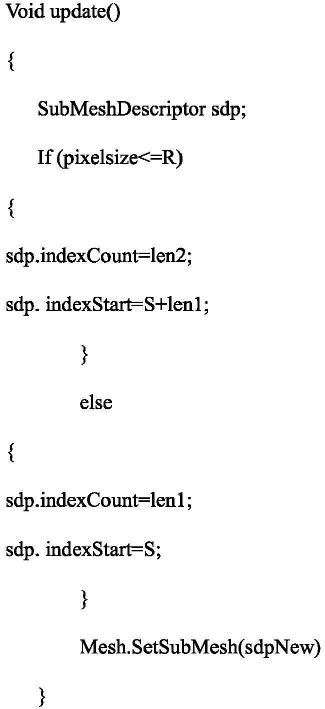

If (pixelsize<=R) indicates a switching condition, pixelsize indicates a switching parameter, and R indicates a switching threshold, {sdp.indexCount=len2;sdp. indexStart=S+len1;}else{sdp.indexCount=len1;sdp. indexStart=} indicates a switching selection item.

In this embodiment of this application, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object. The application scenario includes a game scenario or an animation scenario.

The screen-to-body ratio may indicate an importance degree of the target object on the screen by using the height of the target object on the screen. If the screen-to-body ratio is small, it indicates that the target object is not important on the screen, and the target object may be rendered by using a low-precision LOD model. If the screen-to-body ratio is large, it indicates that the target object is important on the screen, and the target object may be rendered by using a high-precision LOD model. The observation distance may indicate the importance degree of the target object on the screen by using the distance between the target object and the virtual camera. If the observation distance is large, it indicates that the target object is far away from the virtual camera, and the target object is not important on the screen. In this case, the target object may be rendered by using a low-precision LOD model. If the observation distance is small, it indicates that the target object is close to the virtual camera, and the target object is important on the screen, and the target object may be rendered by using a high-precision LOD model. This can ensure a requirement for rendering quality, and improve rendering efficiency.

Certainly, the foregoing only uses one switching threshold and start address offset values and lengths of two LOD models as an example. Actually, when there are three or more LOD models, there may be a plurality of switching thresholds. For each target object, the model switching policy may be associated as a component and stored after the index data of the plurality of LOD models of the target object.

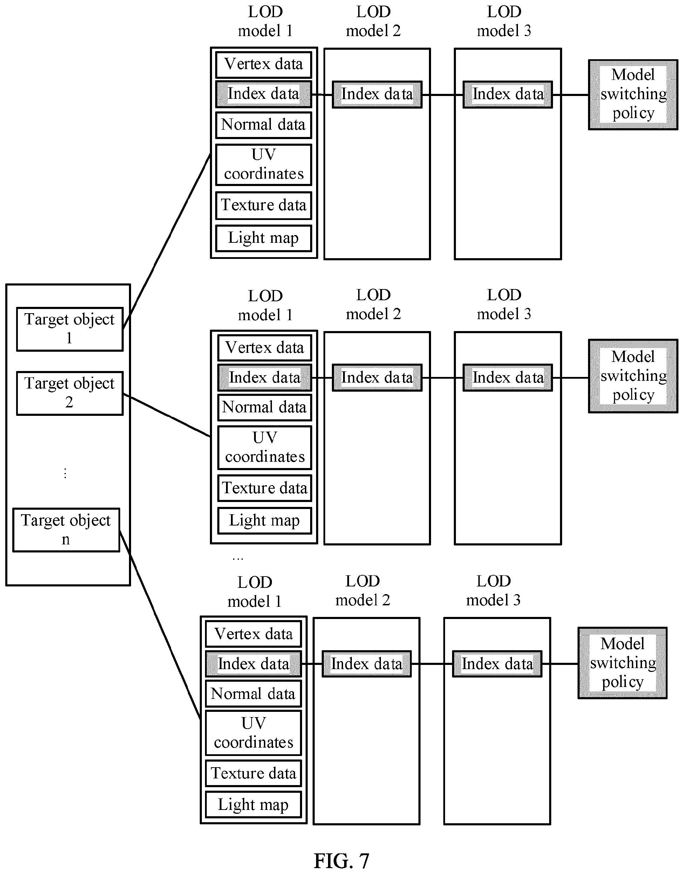

For a representation form of the storage relationship, refer to FIG. 7 for understanding. As shown in FIG. 7, for n target objects in one scenario, each target object has three LOD models, represented by an LOD model 1, an LOD model 2, and an LOD model 3. The LOD model 1 is a basic model, and the LOD model 2 and the LOD model 3 are simplified models. During storage, all data of the LOD model 1 may be stored. For the LOD model 2 and the LOD model 3, only index data may be stored, and then a switching control policy of each target object is stored in an associated manner. In this way, data such as vertex data, normal data, UV data, texture data, and light maps of the two simplified models can be saved. This saves a lot of storage space while ensuring that the plurality of LOD models can be normally used.

In this embodiment of this application, the model switching policy, the index data of each LOD model that is stored in an associated manner, and rendering data of the first LOD model may further be encapsulated in an application packet of the target object. The rendering data of the first LOD model is used to render the target object with a precision corresponding to the first LOD model. The rendering data of the first LOD model may be understood as data of the first LOD model except the index data of the first LOD model.

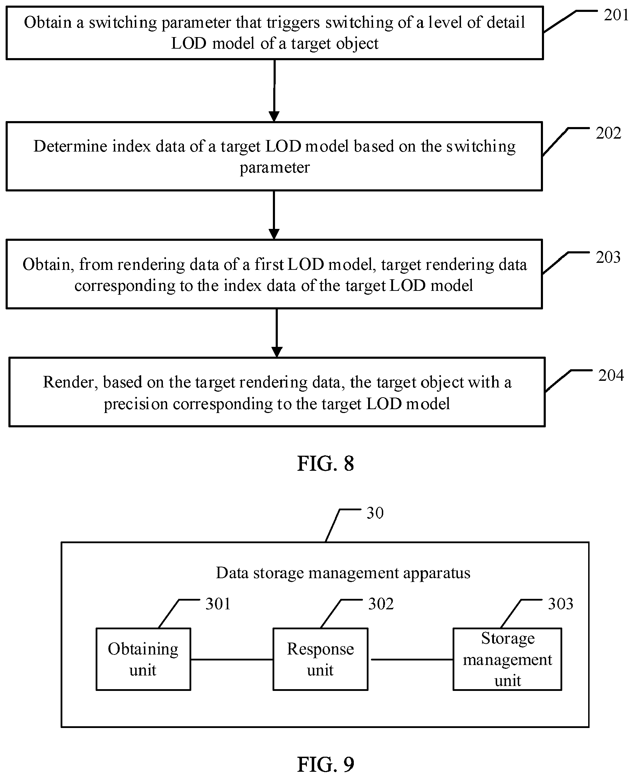

After the application packet of the target object in the application scenario is generated in the foregoing development phase, the application packet may be uploaded to the server in FIG. 1. Then, when using the application, the terminal device of the user may download a series of application packets of the application scenario from the server, execute a running process, and switch different LOD models when the target object is of different importance degrees, to render the target object. The following describes an object rendering process provided in an embodiment of this application with reference to FIG. 8.

As shown in FIG. 8, an embodiment of an object rendering method provided in an embodiment of this application includes the following steps.

201: Obtain a switching parameter that triggers switching of a level of detail LOD model of a target object.

In this embodiment of this application, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object. The application scenario includes a game scenario or an animation scenario.

The screen-to-body ratio may indicate an importance degree of the target object on the screen by using the height of the target object on the screen. If the screen-to-body ratio is small, it indicates that the target object is not important on the screen, and the target object may be rendered by using a low-precision LOD model. If the screen-to-body ratio is large, it indicates that the target object is important on the screen, and the target object may be rendered by using a high-precision LOD model.

The observation distance may indicate the importance degree of the target object on the screen by using the distance between the target object and the virtual camera. If the observation distance is large, it indicates that the target object is far away from the virtual camera, and the target object is not important on the screen. In this case, the target object may be rendered by using a low-precision LOD model. If the observation distance is small, it indicates that the target object is close to the virtual camera, and the target object is important on the screen, and the target object may be rendered by using a high-precision LOD model.

202: Determine index data of a target LOD model based on the switching parameter.

The target LOD model is one of at least two LOD models corresponding to the target object, and each of the at least two LOD models is used to render the target object with a different precision
203: Obtain, from rendering data of a first LOD model, target rendering data corresponding to the index data of the target LOD model. The target rendering data is included in the rendering data of the first LOD model, and the first LOD model is a preconfigured basic model.
204: Render, based on the target rendering data, the target object with a precision corresponding to the target LOD model.

In this embodiment of this application, the target LOD model may reuse data except the index data of the first LOD model. Therefore, for a plurality of LOD models of one target object, a terminal device or a server only needs to store index data of the plurality of LOD models in an associated manner, and then store one piece of data of the first LOD model for rendering the target object except the index data. In this way, one piece of complete rendering data does not need to be stored for each LOD model. This can save storage space.

Optionally, step 202 may include: determining a target switching selection item based on a relationship between the switching parameter and a switching threshold, where the target switching selection item includes both a start address offset value and a length of the index data of the target LOD model; determining target storage space for the index data of the target LOD model based on both the start address offset value and the length of the index data of the target LOD model; and obtaining the index data of the target LOD model from the target storage space.

Optionally, the determining target storage space for the index data of the target LOD model based on both the start address offset value and the length of the index data of the target LOD model includes: determining, based on the start address offset value of the index data of the target LOD model, an initial location of the index data of the target LOD model in index storage space for index data of the at least two LOD models, where the index data of the at least two LOD models is consecutively stored in the index storage space in a sequence of obtaining the index storage space by each of the at least two LOD models; and determining the target storage space for the index data of the target LOD model based on the initial location of the index data of the target LOD model and the length of the index data of the target LOD model.

In this embodiment of this application, the index data of the plurality of LOD models of the target object is stored in a consecutive manner, for example, the storage manners shown in FIG. 5 and FIG. 6. Therefore, storage space for index data of each LOD model may be indicated by using a start address offset value and a length of the index data of each LOD model. For example, first storage space may be found by using S and len1, and second storage space may be found by using M and len2, so that the index data of the target LOD model may be obtained from corresponding target storage space. The target storage space may be quickly determined by using the start address offset value and the length of the index data of the LOD model, and then index data of a corresponding LOD model is quickly found in corresponding storage space, and rendering is further completed. Therefore, in this possible implementation, target object rendering efficiency can be improved.

Optionally, this embodiment of this application further includes: updating data in a switching interface to both the start address offset value and the length of the index data of the target LOD model. The switching interface is used to configure a start address offset value and a length that are used to update index data of a LOD model used by the target object.

In this embodiment of this application, the used LOD model may be controlled by using the switching interface. In this application, both the start address offset value and the length of the index data of the selected target LOD model need to be configured in the switching interface, and then the target LOD model can be executed in a rendering process. The used LOD model is controlled by using the switching interface, so that use of the LOD model is accurately controlled.

For the process, refer to the foregoing example of the switching control policy for understanding. The switching interface may include SubMeshDescriptor and Mesh.SetSubMesh. The start address offset value and the length of the index data of the target LOD model are written into the SubMeshDescriptor interface, and then take effect by using the Mesh.SetSubMesh interface. In this way, when rendering is performed, the target object is rendered by using the target LOD model.

In a test phase, a developer performs a large quantity of experiments to verify impact of the solution of this application on a volume and a frame rate of an application packet.

In a test process, a forest scenario in a real game is used for test. A total quantity of objects in the scenario is 209, and a total quantity of triangles is 745.2 thousand (k). A simplification ratio and a screen-to-body ratio of the object are separately fixed as the switching threshold for simplified model effect analysis. In terms of the simplification ratio and the screen-to-body ratio, for example, if the simplification ratio is set to 0.5, a quantity of triangles of the model is expected to be reduced to 50% of an original quantity of triangles, and a final effect may be different from an expected effect. If the screen-to-body ratio is used as the switching threshold and the switching threshold is set to 0.35, a simplified model is used if a pixel height of the object in the scenario is less than 35% of a screen height in a running process. An original model is used if a pixel height of the object in the scenario is not less than 35% of a screen height.

The simplification ratio is fixed at 0.5, and the screen-to-body ratio is adjusted. Table 2 lists experiment results.

**Table 2: Experiment results**

| Screen-to-body ratio | APK (M) | Tris (k) | Frame rate |
|---|---|---|---|
| Origin (Origin) | 58.57 | 745.2 | 37.23 |
| 0.35 | 60.71 | 374.4 | 41.93 |
| 0.3 | 60.71 | 381.0 | 41.16 |
| 0.25 | 60.71 | 386.6 | 41.28 |

It can be learned from the data in Table 2 that when the screen-to-body ratio is an original value, an APK of the LOD model is 58.57 megabytes (M) in size, a quantity of triangles (Tris) is 745.2 k, and a frame rate is 37.23. When the simplification ratio is 0.5, for data when the switching threshold is set to 0.35, 0.3, or 0.25, refer to last three rows in Table 2. In this scenario, it can be learned by comparing the last three rows with the data when the screen-to-body ratio is the original value that, after the LOD optimization method provided in this solution is used, a volume of an application packet (APK) increases only by about 2 M. When the LOD model sets the switching threshold to 0.35, a gain of 4 frames can be obtained. As the screen-to-body ratio decreases, the frame rate decreases, but not significantly.

The screen-to-body ratio for LOD model switching is fixed at 0.35, and the simplification ratio is adjusted. Table 3 lists experiment results.

**Table 3: Experiment results**

| Simplification ratio | APK (M) | Tris (k) | Frame rate |
|---|---|---|---|
| Origin | 58.57 | 745.2 | 37.23 |
| 0.5 | 60.71 | 374.4 | 41.93 |
| 0.4 | 60.57 | 302.4 | 45.18 |
| 0.3 | 60.46 | 246.4 | 45.9 |

It can be learned from the data in Table 3 that when the model simplification ratio is increased, the volume of the APK is further reduced, and the frame rate is further improved. When the simplification ratio is reduced to 0.3, the frame rate can be increased by about 8 frames.

The foregoing describes the data storage management method in the development phase and the object rendering method in the running phase. The following describes apparatuses provided in embodiments of this application with reference to the accompanying drawings.

As shown in FIG. 9, an embodiment of a data storage management apparatus 30 provided in an embodiment of this application includes the following three units:
An obtaining unit 301 is configured to obtain index data of a first level of detail LOD model. The first LOD model is a preconfigured basic model used to render a target object. The index data is used to mark vertices of the first LOD model.

A response unit 302 is configured to determine index data of a second LOD model in response to a selection operation on a first simplification ratio. The second LOD model is an LOD model that is of the target object and that corresponds to the first simplification ratio. The first simplification ratio indicates a ratio of the index data of the second LOD model to the index data of the first LOD model. Vertices of the second LOD model are a subset of the vertices of the first LOD model.

A storage management unit 303 is configured to store the index data of the second LOD model. Specifically, the storage management unit 303 is configured to store the index data of the second LOD model and the index data of the first LOD model in an associated manner.

In this embodiment of this application, for a plurality of LOD models of a same target object, the vertices of the preconfigured first LOD model may be reused in the simplified LOD model, and the rendering data that is related to the reused vertices and that is used to render the target object may also be reused. In this way, rendering data does not need to be generated for the simplified second LOD model. This can improve efficiency of generating the simplified model. In addition, the simplified LOD model may reuse data except the index data of the first LOD model. Therefore, for the plurality of LOD models of one target object, only the index data of the plurality of LOD models needs to be stored in an associated manner, and one piece of rendering data of the first LOD model except the index data needs to be stored. In this way, one piece of complete rendering data does not need to be stored for each LOD model. This can save storage space.

Optionally, the storage management unit 303 is configured to store the index data of the first LOD model in first storage space, and store the index data of the second LOD model in second storage space. A last address of the first storage space is adjacent to a first address of the second storage space.

Optionally, the response unit 302 is further configured to determine index data of a third LOD model in response to a selection operation on a second simplification ratio. The third LOD model is an LOD model that is of the target object and that corresponds to the second simplification ratio. The second simplification ratio indicates a ratio of the index data of the third LOD model to the index data of the first LOD model. Vertices of the third LOD model are a subset of the vertices of the first LOD model. The second simplification ratio is less than the first simplification ratio.

The storage management unit 303 is further configured to store the index data of the third LOD model in third storage space. A first address of the third storage space is adjacent to a last address of the second storage space.

Optionally, the data storage management apparatus 30 further includes a processing unit. The processing unit is configured to generate a model switching policy for the target object. The model switching policy includes a switching condition and a switching selection item. The switching condition indicates a relationship between a switching parameter that triggers LOD model switching of the target object and a switching threshold. The switching selection item includes both a start address offset value and a length of index data of each of at least two LOD models. Each of the at least two LOD models is used to render the target object with a different precision.

The storage management unit 303 is further configured to store the model switching policy and the index data of each LOD model in an associated manner.

Optionally, the processing unit is further configured to encapsulate the model switching policy, the index data of each LOD model that is stored in an associated manner, and rendering data of the first LOD model in an application packet of the target object. The rendering data of the first LOD model is used to render the target object with a precision corresponding to the first LOD model. The rendering data of the first LOD model may be understood as data of the first LOD model except the index data of the first LOD model.

Optionally, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object. The application scenario includes a game scenario or an animation scenario.

For the data storage management apparatus 30, refer to corresponding descriptions in the foregoing method embodiment for understanding. Details are not described herein again.

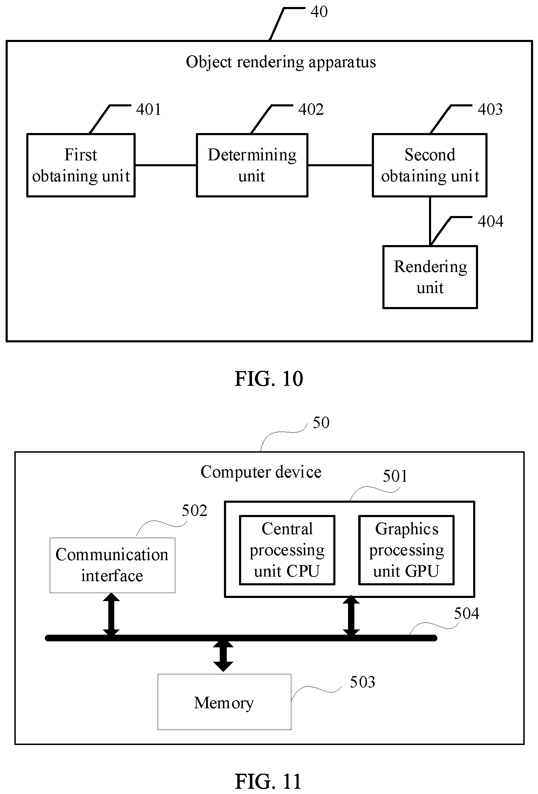

As shown in FIG. 10, an embodiment of an object rendering apparatus 40 provided in an embodiment of this application includes the following units:
A first obtaining unit 401 is configured to obtain a switching parameter that triggers switching of a level of detail LOD model of a target object.

A determining unit 402 is configured to determine index data of a target LOD model based on the switching parameter. The target LOD model is one of at least two LOD models corresponding to the target object. Each of the at least two LOD models is used to render the target object with a different precision.

A second obtaining unit 403 is further configured to obtain, from rendering data of a first LOD model, target rendering data corresponding to the index data of the target LOD model. The target rendering data is included in the rendering data of the first LOD model, and the first LOD model is a preconfigured basic model.

A rendering unit 404 is configured to render, based on the target rendering data, the target object with a precision corresponding to the target LOD model.

In this embodiment of this application, the target LOD model may reuse data except the index data of the first LOD model. Therefore, for a plurality of LOD models of one target object, a terminal device or a server only needs to store index data of the plurality of LOD models in an associated manner, and then store one piece of data of the first LOD model for rendering the target object except the index data. In this way, one piece of complete rendering data does not need to be stored for each LOD model. This can save storage space.

Optionally, the determining unit 402 is configured to: determine a target switching selection item based on a relationship between the switching parameter and a switching threshold, where the target switching selection item includes both a start address offset value and a length of the index data of the target LOD model; determine target storage space for the index data of the target LOD model based on both the start address offset value and the length of the index data of the target LOD model; and obtain the index data of the target LOD model from the target storage space.

Optionally, the determining unit 402 is configured to determine, based on the start address offset value of the index data of the target LOD model, an initial location of the index data of the target LOD model in index storage space for index data of the at least two LOD models, where the index data of the at least two LOD models is consecutively stored in the index storage space in a sequence of obtaining the index storage space by each of the at least two LOD models; and determine the target storage space for the index data of the target LOD model based on the initial location of the index data of the target LOD model and the length of the index data of the target LOD model.

Optionally, the determining unit 402 is further configured to update data in a switching interface to both the start address offset value and the length of the index data of the target LOD model. The switching interface is used to configure a start address offset value and a length that are used to update index data of a LOD model used by the target object.

Optionally, the switching parameter includes a screen-to-body ratio or an observation distance. The screen-to-body ratio indicates a ratio of a height of the target object on a screen to a height of the screen. The observation distance indicates a distance from a virtual camera in an application scenario to the target object.

Optionally, the target object is a static object in an application scenario, and the application scenario includes a game scenario or an animation scenario.

For the object rendering apparatus 40, refer to corresponding descriptions in the foregoing method embodiment. Details are not described herein again.

FIG. 11 is a schematic diagram of a possible logical structure of a computer device 50 according to an embodiment of this application. The computer device 50 may be the data storage management apparatus 30 or the object rendering apparatus 40. The computer device 50 includes a processor 501, a communication interface 502, a memory 503, and a bus 504. The processor 501, the communication interface 502, and the memory 503 are connected to each other through the bus 504. In this embodiment of this application, the processor 501 is configured to control and manage an action of the computer device 50. For example, the processor 501 is configured to perform steps 101 to 103 and steps 201 to 204 in the method embodiments in FIG. 2 to FIG. 8. The communication interface 502 is configured to support the computer device 50 in performing communication. The memory 503 is configured to store program code and data that are of the computer device 50.

The processor 501 may include a central processing unit (central processing unit, CPU) and a graphics processing unit (graphic processing unit GPU). Alternatively, the CPU may be replaced with a general-purpose processor, a digital signal processor, an application-specific integrated circuit, a field programmable gate array or another programmable logic device, a transistor logic device, a hardware component, or any combination thereof. The processor 501 may implement or execute logical blocks, modules, and circuits in various examples described with reference to content disclosed in this application. Alternatively, the processor 501 may be a combination of processors implementing a computing function, for example, a combination of one or more microprocessors, or a combination of a digital signal processor and a microprocessor. The bus 504 may be a peripheral component interconnect standard (Peripheral Component Interconnect, PCI) bus, an extended industry standard architecture (Extended Industry Standard Architecture, EISA) bus, or the like. The bus may include an address bus, a data bus, a control bus, and the like. For ease of representation, only one bold line is used to represent the bus in FIG. 11, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the data storage method in FIG. 2 to FIG. 7.

In another embodiment of this application, a computer-readable storage medium is further provided. The computer-readable storage medium stores computer-executable instructions. When a processor of a device executes the computer-executable instructions, the device performs the object rendering method in FIG. 8.

In another embodiment of this application, a computer program product is further provided. The computer program product includes computer-executable instructions, and the computer-executable instructions are stored in a computer-readable storage medium. When a processor of a device executes the computer-executable instructions, the device performs the data storage management method in FIG. 2 to FIG. 7.

In another embodiment of this application, a computer program product is further provided. The computer program product includes computer-executable instructions, and the computer-executable instructions are stored in a computer-readable storage medium. When a processor of a device executes the computer-executable instructions, the device performs the object rendering method in FIG. 8.

In another embodiment of this application, a chip system is further provided. The chip system includes a processor, and the processor is configured to support a memory management apparatus in performing the data storage management method in FIG. 2 to FIG. 7. In a possible design, the chip system may further include a memory. The memory is configured to store program instructions and data that are necessary for a memory management apparatus. The chip system may include a chip, or may include a chip and another discrete component.

In another embodiment of this application, a chip system is further provided. The chip system includes a processor, and the processor is configured to support a memory management apparatus in performing the object rendering method in FIG. 8. In a possible design, the chip system may further include a memory. The memory is configured to store program instructions and data that are necessary for a memory management apparatus. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in embodiments of this application, it should be understood that the disclosed system, apparatus, and method may be implemented in another manner. For example, the foregoing apparatus embodiments are only examples. For example, division into the units is only logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in a form of a software function unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of embodiments of this application, but are not intended to limit the protection scope of embodiments of this application.

## Claims

1. A data storage management method, comprising:
obtaining index data of a first level of detail LOD model, wherein the first LOD model is a preconfigured basic model used to render a target object, and the index data is used to mark vertices of the first LOD model;
determining index data of a second LOD model in response to a selection operation on a first simplification ratio, wherein the second LOD model is an LOD model that is of the target object and that corresponds to the first simplification ratio, the first simplification ratio indicates a ratio of the index data of the second LOD model to the index data of the first LOD model, and vertices of the second LOD model are a subset of the vertices of the first LOD model; and
storing the index data of the second LOD model.

2. The method according to claim 1, wherein the storing the index data of the second LOD model comprises:
storing the index data of the second LOD model and the index data of the first LOD model in an associated manner.

3. The method according to claim 2, wherein the storing the index data of the second LOD model and the index data of the first LOD model in an associated manner comprises:
storing the index data of the first LOD model in first storage space, and storing the index data of the second LOD model in second storage space, wherein a last address of the first storage space is adjacent to a first address of the second storage space.

4. The method according to claim 3, wherein the method further comprises:
determining index data of a third LOD model in response to a selection operation on a second simplification ratio, wherein the third LOD model is an LOD model that is of the target object and that corresponds to the second simplification ratio, the second simplification ratio indicates a ratio of the index data of the third LOD model to the index data of the first LOD model, vertices of the third LOD model are a subset of the vertices of the first LOD model, and the second simplification ratio is less than the first simplification ratio; and
storing the index data of the third LOD model in third storage space, wherein a first address of the third storage space is adjacent to a last address of the second storage space.

5. The method according to any one of claims 1 to 4, wherein the method further comprises:
generating a model switching policy for the target object, wherein the model switching policy comprises a switching condition and a switching selection item, the switching condition indicates a relationship between a switching parameter that triggers LOD model switching of the target object and a switching threshold, the switching selection item comprises both a start address offset value and a length of index data of each of at least two LOD models, and each of the at least two LOD models is used to render the target object with a different precision; and
storing the model switching policy and the index data of each LOD model in an associated manner.

6. The method according to claim 5, wherein the method further comprises:
encapsulating the model switching policy, the index data of each LOD model, and rendering data of the first LOD model in an application packet of the target object, wherein the rendering data of the first LOD model is used to render a target object with a precision corresponding to the first LOD model.

7. The method according to claim 5 or 6, wherein the switching parameter comprises a screen-to-body ratio or an observation distance;
the screen-to-body ratio indicates a ratio of a height of the target object on a screen to a height of the screen; and
the observation distance indicates a distance from a virtual camera in an application scenario to the target object, and the application scenario comprises a game scenario or an animation scenario.

8. An object rendering method, comprising:
obtaining a switching parameter that triggers switching of a level of detail LOD model of a target object;
determining index data of a target LOD model based on the switching parameter, wherein the target LOD model is one of at least two LOD models corresponding to the target object, and each of the at least two LOD models is used to render the target object with a different precision;
obtaining, from rendering data of a first LOD model, target rendering data corresponding to the index data of the target LOD model, wherein the first LOD model is a preconfigured basic model; and
rendering, based on the target rendering data, the target object with a precision corresponding to the target LOD model.

9. The method according to claim 8, wherein the determining index data of a target LOD model based on the switching parameter comprises:
determining a target switching selection item based on a relationship between the switching parameter and a switching threshold, wherein the target switching selection item comprises both a start address offset value and a length of the index data of the target LOD model;
determining target storage space for the index data of the target LOD model based on both the start address offset value and the length of the index data of the target LOD model; and
obtaining the index data of the target LOD model from the target storage space.

10. The method according to claim 9, wherein the determining target storage space for the index data of the target LOD model based on both the start address offset value and the length of the index data of the target LOD model comprises:
determining, based on the start address offset value of the index data of the target LOD model, an initial location of the index data of the target LOD model in index storage space for index data of the at least two LOD models, wherein the index data of the at least two LOD models is consecutively stored in the index storage space in a sequence of obtaining the index storage space by each of the at least two LOD models; and
determining the target storage space for the index data of the target LOD model based on the initial location of the index data of the target LOD model and the length of the index data of the target LOD model.

11. The method according to claim 9 or 10, wherein after the determining a target switching selection item based on a relationship between the switching parameter and a switching threshold, the method further comprises:
updating data in a switching interface to both the start address offset value and the length of the index data of the target LOD model, wherein the switching interface is used to configure a start address offset value and a length that are used to update index data of a LOD model used by the target object.

12. The method according to any one of claims 8 to 11, wherein the switching parameter comprises a screen-to-body ratio or an observation distance;
the screen-to-body ratio indicates a ratio of a height of the target object on a screen to a height of the screen; and
the observation distance indicates a distance from a virtual camera in an application scenario to the target object.

13. The method according to any one of claims 8 to 12, wherein the target object is a static object in an application scenario, and the application scenario comprises a game scenario or an animation scenario.

14. A computer-readable storage medium, storing a computer program, wherein when the computer program is executed by one or more processors, the method according to any one of claims 1 to 7 is performed.

15. A computer-readable storage medium, storing a computer program, wherein when the computer program is executed by one or more processors, the method according to any one of claims 8 to 13 is performed.

16. A calculating device comprising one or more processors and a computer-readable storage medium storing a computer program, wherein
the one or more processors are coupled to the computer-readable storage medium, and when the computer program is executed by the one or more processors, the method according to any one of claims 1 to 7 is performed.

17. A calculating device comprising one or more processors and a computer-readable storage medium storing a computer program, wherein
the one or more processors are coupled to the computer-readable storage medium, and when the computer program is executed by the one or more processors, the method according to any one of claims 8 to 13 is performed.

18. A chip system, comprising one or more processors, wherein the one or more processors are invoked to perform the method according to any one of claims 1 to 7.

19. A chip system, comprising one or more processors, wherein the one or more processors are invoked to perform the method according to any one of claims 8 to 13.

20. A computer program product, comprising a computer program, wherein when the computer program is executed by one or more processors, the method according to any one of claims 1 to 7 is performed.

21. A computer program product, comprising a computer program, wherein when the computer program is executed by one or more processors, the method according to any one of claims 8 to 13 is performed.
